# EUROPEAN PATENT APPLICATION

(11) **EP 1 757 970 A2**
(43) Date of publication of application: **28.02.2007**
(21) Application number: 06024552.9
(22) Date of filing: 21.04.2005
(51) Int. Cl.: G02B 21/00

(54) **Mobile microscope for checking in real time welding of laser welding machine**

(30) Priority: 22.04.2004 KR 20040027749
(62) Divisional of application: 05008816.0
(71) Applicant: Yong, Chung Kweon, Eunpyeong-gu Seoul 122-010 (KR)
(72) Inventor: Yong, Chung Kweon, Eunpyeong-gu Seoul 122-010 (KR)
(74) Representative: Grünecker, Kinkeldey, Stockmair & Schwanhäusser Anwaltssozietät

(57) **Abstract**

Provided is a microscope for a laser welding machine, which allows a worker to precisely inspect the weld state in an enlarged scale with the naked eye while protecting the worker's eyes from strong light such as a flash and plasma generated during a laser welding process. The microscope includes: an eyepiece movably installed in tubes of a main body, for adjusting the magnification of the microscope; a pair of prisms installed below the eyepiece, for making a welding object focused to one image; an objective lens installed below the pair of the prisms, for adjusting a focal length such that a worker sees the welding object within a worker's focal range; an LC shutter which covers and protects the objective lens when an infrared flash is generated and opens the objective lens so as to inspect the weld state in real time when the laser welding is completed; a filter lens for blocking the infrared flash generated during the laser welding; a total reflection lens installed below the filter lens, for totally reflecting a harmful wave; and a safety glass for protecting the total reflection lens from fragments generated during the laser welding. Also, the laser welding can be performed regardless of the location, size, shape, or the like of the welding object owing to the convenient mobility and easy installation and removal of the microscope.

## Description

### BACKGROUND OF THE INVENTION

### Field of the Invention

The present invention relates to a microscope for checking a real time welding of a laser welding machine in an enlarged scale, and more particularly, to a microscope for checking a real time welding of a laser welding machine, which allows a worker to precisely inspect the weld state in an enlarged scale with the naked eye while protecting the worker's eyes from strong light such as a flash and plasma that are generated in the course of a laser welding process.

Further, the present invention is directed to a microscope for precisely checking a real time welding of a laser welding machine, which provides a convenient mobility and easy installation and removal regardless of location, size or shape of the welding object.

### Description of the Related Art

Generally, there are a variety of welding methods. In recent years, among these welding methods, the laser welding method appears on the stage instead of the spot welding method.

Welding with a spot welding machine is performed with a welding head contacting a welding object in a state where electric power is applied to the welding object. However, the laser-welding machine is developed to realize non-contact high speed welding. The laser welding machine is designed such that a laser beam generated by an oscillator is triggered to a welding object through an output adjusting lens and a plurality of prisms in a welding head, in which the oscillator and other required parts are disposed, to perform precise welding. The output of the laser beam during the welding is adjusted by varying an angle of the output adjusting lens with respect to an advancing axis of the laser beam.

When the laser beam triggered from the non-contact type laser welding machine welds the welding object, a strong light such as a flash or plasma welds the welding object is generated. Particularly, since the laser welding machine performs precise welding by one or scores of beam triggers per minute, it is impossible for a worker to weld while checking the weld state with the naked eye due to the strong light of the beams.

Accordingly, in recent years, a weld checking apparatus for checking the weld state during laser welding or spot welding in an automatic production line has been developed on a commercial scale.

The weld-checking apparatus comprises a relay switch coupled to an output side, the relay switch outputting a switching signal when the laser welding is performed, and a display part for displaying the number of times the welding is performed, i.e., the number of welds, by receiving the switching signal from the relay switch. Such a weld-checking apparatus is installed on a robot for performing the laser welding in the automatic production line, notifying a worker only how many times the welding is performed.

That is, the weld-checking apparatus is designed to display the number of times the welding was performed whenever the laser welding or spot welding is processed in the automatic production line. Therefore, it is impossible for the worker to check whether the robot is correctly welding the welding object. As a result, after the robot welds a large number of welding objects, the worker must examine the welded portions of the objects with the naked eye to determine if there are any bad welds. When there is bad welding on the object, it must be re-welded using the robot, which is troublesome for the worker. Furthermore, since the re-welded portion is not smooth, it may be easily damaged.

Particularly, when precise manual laser welding is required without using the robot, it is impossible for the worker to check the weld state in the course of the welding process due to a strong light such as a flash, plasma, and the like that are generated during the welding process. Therefore, the worker must check the welded portion with the naked eye after each unit welding process is finished. This must be repeated until the entire welding process is finished, deteriorating the advantage of the laser welding that can realize the non-contacting high speed welding. Furthermore, since it is impossible to check the weld state while performing the welding process, the weld is not precise and is unevenly realized.

### SUMMARY OF THE INVENTION

Therefore, the present invention has been made in an effort to solve the above-described problems of the conventional arts. The present invention is designed to provide a microscope for a laser welding machine, which is inexpensive and reliable and allows a worker to check a weld state with the naked eyes in real time while protecting the worker's eyes from flash or plasma or the like generated during the laser welding.

An object of the present invention is to provide a microscope for a laser welding machine, which enables a worker to precisely check a weld state with his or her naked eyes in real time while protecting the worker's eyes from strong light such as flash or plasma generated during the laser welding.

Another object of the present invention is to provide a microscope for a laser welding machine, in which precise weld state can be inspected in real time regardless of the location, size, shape or the like of a welding object owing to a convenient mobility and easy installation and removal of the microscope.

To achieve these objects and other advantages and in accordance with the purpose of the invention, as embodied and broadly described herein, there is provided a microscope for a laser welding machine, having a main body provided with a pair of tubes that are integrally formed; an eyepiece movably installed in the tubes of the main body, for adjusting the magnification of the microscope by moving upward or downward; a pair of prisms installed below the eyepiece, for making a welding object focused to one image according to the distance between worker's eyes; an objective lens installed below the pair of the prisms, for adjusting a focal length such that the worker sees the welding object within a worker's focal range; an LC (liquid crystal) shutter installed below the objective lens, for primarily covering and protecting the objective lens the moment when an infrared flash is generated and for opening the objective lens so as to inspect the weld state of the welding object in real time when the laser welding is completed; a filter lens installed below the LC shutter, for secondarily blocking the infrared flash generated during the laser welding so as to prevent dazzling; a total reflection lens installed below the filter lens and coated with a reflecting material, for totally reflecting and blocking a harmful wave generated from the laser beam; and a safety glass installed below the total reflection lens, for safely protecting the total reflection lens from splinters generated during the laser welding.

Preferably, the microscope further includes: a flexible arm of which one end is coupled to an outside of the main body, for easy adjustment of a focal length between the main body and the welding object, the flexible arm being provided with a power cable; a magnet base capable of being mounted detachably on a metal platform and into which the other end of the flexible arm is rotatably inserted, for allowing the flexible arm to be fixed thereto or to be rotated in right and left directions thereabout by fastening and loosing an adjusting screw; and a halogen lamp installed at a portion close to the one end of the flexible arm and supplied with power through the power cable, for emitting light to the welding object.

Selectively, the pair of prisms are disposed such that their bottoms face each other, one of the paired prisms being directed to the left and the other to the right.

Therefore, the LC shutter is closed each time the laser beam is triggered to primarily block the strong light such as flash and plasma, the filter lens secondarily blocks a harmful wave of the infrared flash, and the LC shutter is opened each time the triggering of the laser beam is ended to allow the worker to inspect the weld state in enlarged scale and real time by looking through the eyepiece.

As a result, the worker's eyes can be protected from the strong flash emitted during the laser welding, and as well the welded point can be precisely inspected in enlarged scale and real time by using the microscope. Particularly, when the laser welding is manually performed, precise welding can be attained and further the laser welding can be performed regardless of the location, size, shape, or the like of the welding object owing to the convenient mobility and easy installation and removal of the microscope.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

FIG. 1 is a schematic view showing a construction of a microscope connected with a flexible arm of a laser welding machine according to the present invention; and

FIG. 2 is an enlarged view showing a construction of the microscope in FIG. 1.

### DETAILED DESCRIPTION OF THE PREFERRED EMBODIMENTS

Reference will now be made in detail to a preferred embodiment of the present invention with reference to the accompanying drawings.

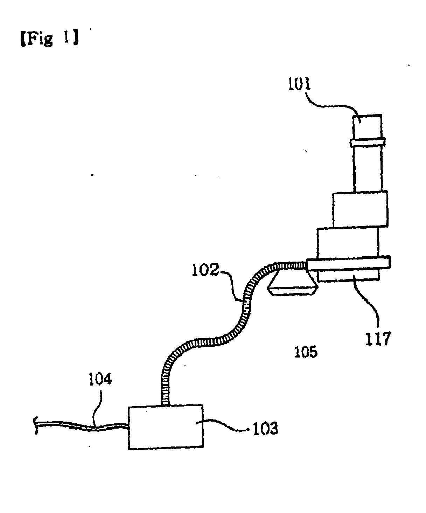

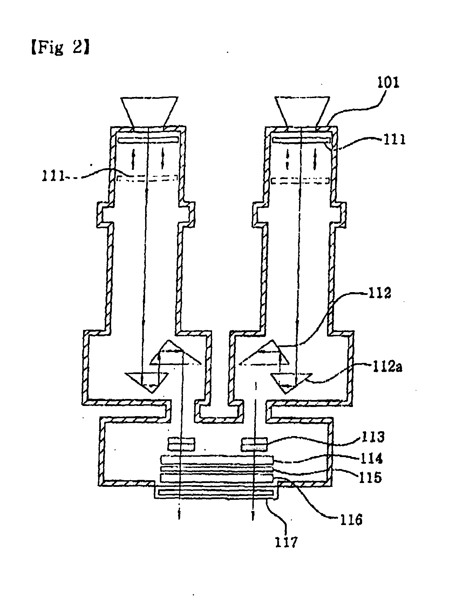

FIG. 1 is a schematic view showing a construction of a microscope connected with a flexible arm of a laser welding machine according to the present invention and FIG. 2 is an enlarged view showing a construction of the microscope in FIG. 1.

Referring to FIG. 2, a microscope for a laser welding machine includes a main body 101, eyepieces 111, two pairs of prisms 112 and 112a, an objective lens 113, a liquid crystal (LC) shutter 114, a filter lens 115, a total reflection lens 116, and a safety glass 117.

The main body 101 is provided with a pair of tubes that are integrally formed, so as to enable a person to view a welding object with both eyes at once. The eyepieces 111 are movably installed in the tubes of the main body 101, for adjusting the magnification of the microscope by moving upward or downward. Each pair of the prisms 112 and 112a is installed below the eyepieces 111 to make a welding object focused to one image according to the distance between worker's eyes. The objective lens 113 is installed below the two pairs of the prisms 112 and 112a to adjust a focal length, such that the worker can see the welding object within a focal range of the worker who looks through the eyepieces 111. The LC shutter 114 is installed below the objective lens 113 to primary cover and protect the objective lens 113 when an infrared flash is generated due to a triggered laser beam in the course of a laser welding, and to open the objective lens 113 for checking the weld state of the welding object in real time when the laser welding is completed. The filter lens 115 is installed below the LC shutter 114 to secondarily block the infrared flash generated during the laser welding, for preventing dazzling. The total reflection lens 116 is installed below the filter lens 115 and coated with a reflecting material to totally reflect and block a harmful wave generated from the laser beam. The safety glass 117 is installed below the total reflection lens 116 to protect the total reflection lens 116 from sputtering fragments during the laser welding.

Referring to FIG. 1, the microscope for a laser welding machine further includes a flexible arm 102, a magnet base 103, and a halogen lamp 105.

One end of the flexible arm 102 is coupled to an outside of the main body 101 and the flexible arm 102 is provided with a power cable 104 therein. The other end of the flexible arm 102 is rotatably inserted in the magnet base 103, and the inserted flexible arm 102 can be fixed to the magnet base 103 or rotated in right and left direction about the magnet base 103 by fastening and loosing an adjusting screw. The magnet base 103 is suitable to be attached on a metal platform or the like. The halogen lamp 105 is installed at a portion close to the one end of the flexible arm 102 and supplied with power through the power cable 104 to emit light to the welding object. Therefore, the focal length between the main body 101 and the welding object can be easily adjusted using the flexible arm 102.

The microscope for a laser welding machine having above-mentioned structure will now be more fully described with reference to accompanying drawings.

Referring again to FIG. 2, two eyepieces 111 installed in the main body 101 enable the worker to see a welding object with his or her both eyes. The welding object can be seen in magnified scale, such as 10X, 16X, 20X and 40X, by moving the eyepieces 111 upward or downward.

Since each worker has a different distance between his or her two eyes, the two pairs of prisms 112 and 112a are provided to compensate for the difference in vision between two eyes.

That is, the welding object can be clearly seen in one image by adjusting the two pairs of prisms 112 and 112a. Each of the prisms 112 and 112a has a triangular section and each pair of the prisms 112 and 112a is arranged with its bottom facing each other, one directed to the left and the other to the right.

The objective lens 113 installed below the two pairs of prisms 112 and 112a is provided to see the welding object within the focal range of the worker who is looking through the eyepieces 111. Herein, the objective lens 113 can be selected from 100-mm, 120-mm, 150-mm, 200-mm focal length objective lens or the like.

The LC shutter 114 installed below the objective lens 113 is repeatedly closed and opened according to a synchronized voltage signal generated each time the laser beam is triggered from the laser welding machine. In other words, during the laser beam is being triggered, the LC shutter 114 is closed according to the synchronized voltage signal to protect the worker's eyes from the flash produced due to the laser beam. When the triggering of the laser beam is ended, the LC shutter 114 is opened according to the synchronized voltage signal to expose the objective lens 113, such that the welding object finished the laser welding can be inspected rapidly and consecutively through the objective lens 113.

The filter lens 115 installed below the LC shutter 114 is provided to secondarily block the infrared flash generated during the laser welding, thereby preventing dazzling.

The total reflection lens 116 installed below the filter lens 115 is coated with the reflecting material to reflect and block the harmful wave (1064 nm) generated from the laser beam. If the harmful wave directly contacts with the worker's eyes, the worker can loose his or her sight, such that the total reflection lens 116 is essentially required.

The safety lens 117 installed below the total reflection lens 116 is provided to protect the total reflection lens 116 from the sputtering fragments during the laser welding.

Referring again to FIG. 1, the flexible arm 102, which is coupled to the outside of the main body 101 at its one end and provided with the power cable 104 therein, is made of a flexible bellow tube, such that the focal length between the main body 101 and the welding object can be easily adjusted using the flexible arm 102.

Further, the other end of the flexible arm 102 is rotatably inserted in the magnet base 103, and the inserted flexible arm 102 can be fixed to the magnet base 103 or rotated in right and left directions about the magnet base 103 by fastening and loosing an adjusting screw, such that the focal length can be adjusted regardless of the location of the welding object.

The magnet base 103, to which the other end of the flexible arm 102 is coupled, can be easily attached and detached on a metal platform or the like by using magnetic force, such that the magnet base can be easily installed regardless of the location, size, shape, or the like of the welding object.

The halogen lamp 105, which is installed on the flexible arm 102 and connected with the power cable 104 disposed in the flexible arm 103, functions to emit a light to the welding object.

In the related art laser welding machine, the weld point of the welding object is inspected one by one with worker's naked eyes after the laser welding. On the other hand, the present inventive microscope is designed in such a manner that the LC shutter 114 is closed according to the synchronized voltage signal each time the laser beam is triggered, to block the strong flash and the LC shutter is opened each time the triggering of the laser beam is ended, such that the welded point of the welding object can be inspected in enlarged scale and real time.

Therefore, according to the present invention, the worker's eyes can be protected from the strong flash emitted during the laser welding, and as well the welded point can be precisely inspected in enlarged scale and real time by using the microscope. Particularly, when the laser welding is manually performed, precise welding can be attained and further the laser welding can be performed regardless of the location, size, shape, or the like of the welding object owing to the convenient mobility and easy installation and removal of the microscope.

As described above, the LC shutter 114 is closed each time the laser beam is triggered to primarily block the strong light such as flash and plasma, the filter lens 115 secondarily blocks the infrared flash, and the total reflection lens 116 reflects and blocks the harmful wave, such that the worker's eyes can be protected. Further, the welded point can be precisely inspected in enlarged scale and real time.

In addition, the precise weld state can be inspected in real time regardless of the location, size, shape or the like of the welding object owing to the convenient mobility and easy installation and removal of the microscope.

It will be apparent to those skilled in the art that various modifications and variations can be made in the present invention. Thus, it is intended that the present invention covers the modifications and variations of this invention provided they come within the scope of the appended claims and their equivalents.

## Claims

1. A microscope for checking a real time welding of a laser welding machine, comprising:
a main body provided with a pair of tubes that are integrally formed;
an eyepiece movably installed in the tubes of the main body, for adjusting magnification of the microscope by moving upward or downward;
a pair of prisms installed below the eyepiece inside the main body, for making a welding object focused to one image according to the distance between worker's eyes;
an objective lens installed below the pair of the prisms, for adjusting a focal length such that the worker sees the welding object within a worker's focal range;
an LC (liquid crystal) shutter installed below the objective lens, for primarily covering and protecting the objective lens the moment when an infrared flash is generated and for opening the objective lens so as to inspect the weld state of the welding object in real time when the laser welding is completed;
a filter lens installed below the LC shutter, for secondarily blocking the infrared flash generated during the laser welding so as to prevent dazzling;
a total reflection lens installed below the filter lens and coated with a reflecting material, for totally reflecting and blocking a harmful wave generated from the laser beam; and
a safety glass installed below the total reflection lens, for safely protecting the total reflection lens from fragments generated during the laser welding.

2. The microscope of claim 1, further comprising:
a flexible arm of which one end is coupled to an outside of the main body, for easy adjustment of a focal length between the main body and the welding object, the flexible arm being provided with a power cable;
a magnet base capable of being mounted detachably on a metal platform and into which the other end of the flexible arm is rotatably inserted, for allowing the flexible arm to be fixed thereto or to be rotated in right and left directions thereabout by fastening and loosing an adjusting screw; and
a halogen lamp installed at a portion close to the one end of the flexible arm and supplied with power through the power cable, for emitting light to the welding object.

3. The microscope of claim 1, wherein the pair of prisms have a triangular section.

4. The microscope of claim 3, wherein the pair of prisms are disposed such that their bottoms face each other, one of the paired prisms being directed to the left and the other to the right.
